(19) **Europäisches Patentamt / European Patent Office / Office européen des brevets**

(11) **EP 1 607 127 B1**

(12) # EUROPÄISCHE PATENTSCHRIFT

(45) Veröffentlichungstag und Bekanntmachung des Hinweises auf die Patenterteilung:
**26.01.2011 Patentblatt 2011/04**

(51) Int Cl.:
**B01D 21/24** *(2006.01)*  **B01D 17/02** *(2006.01)*

(21) Anmeldenummer: **05017931.6**

(22) Anmeldetag: **02.10.2002**

(54) **Absetzbecken**

Settling tank

Bassin de sédimentation

(84) Benannte Vertragsstaaten:
**AT BE BG CH CY CZ DE DK EE ES FI FR GB GR IE IT LI LU MC NL PT SE SK TR**

(30) Priorität: **04.04.2002 DE 10214963**

(43) Veröffentlichungstag der Anmeldung:
**21.12.2005 Patentblatt 2005/51**

(62) Dokumentnummer(n) der früheren Anmeldung(en) nach Art. 76 EPÜ:
**02022051.3 / 1 354 614**

(73) Patentinhaber: **hydrograv GmbH**
**01067 Dresden (DE)**

(72) Erfinder: **Armbruster, Martin, Dr.-Ing.**
**01307 Dresden (DE)**

(74) Vertreter: **Durm, Frank et al**
**Durm & Partner**
**Patentanwälte**
**Moltkestrasse 45**
**76133 Karlsruhe (DE)**

(56) Entgegenhaltungen:
EP-A- 0 923 971    DE-A- 4 431 369
DE-A- 19 852 204    DE-B- 1 045 931
GB-A- 867 948

- **PATENT ABSTRACTS OF JAPAN Bd. 008, Nr. 077 (C-218), 10. April 1984 (1984-04-10) & JP 59 004407 A (MITSUBISHI JUKOGYO KK), 11. Januar 1984 (1984-01-11)**
- **PATENT ABSTRACTS OF JAPAN Bd. 2000, Nr. 14, 5. März 2001 (2001-03-05) & JP 2000 325706 A (NISSHIN STEEL CO LTD;KURITA WATER IND LTD), 28. November 2000 (2000-11-28)**

**Beschreibung**

Die Erfindung betrifft ein Absetzbecken für eine zweiphasige Suspension, insbesondere für Klärschlamm, in dem sich durch gravitative Trennung die dichtere und damit schwerere Phase nach unten absetzt, wodurch sich ein Trennspiegel zwischen der schweren und der leichten Phase bildet.

Gravitative Absetzbecken werden heute weltweit als Standardbauwerke der Fest/Flüssigtrerinung in biologischen Reinigungsstufen von Kläranlagen eingesetzt. Trotz Jahrzehnte langer Forschungsarbeit auf diesem Gebiet funktionieren diese Bauwerke nicht optimal. Ihre Abtrennleistung ist unbefriedigend in Bezug auf den Raum, der ihnen hierzu zur Verfügung steht. Auch die Ablaufwerte der zu klärenden leichteren Phase sind häufig nicht befriedigend. Dies ist insbesondere dann der Fall, wenn der Einlauf über dem Trennspiegel liegt. Als Trennspiegel wird die Höhenlage bezeichnet, ab der die Konzentration im Absetzbecken vom Überstand leichterer Phase aus betrachtet mit einem hohen Gradienten zur schwereren Phase steigt. Als Ablaufwert oder Ablaufqualität bezeichnet man die Restmenge abzutrennender schwerer Phase im Ablauf der zu klärenden leichten Phase oder umgekehrt. Wegen der bekannten Probleme mit Absetzbecken gibt es zahlreiche Veröffentlichungen, die sich mit einer Optimierung dieser Bauwerke beschäftigen. Dabei wird immer wieder auf den dominanten Einfluss des Einlaufbauwerks verwiesen.

Den Gesetzen der Physik der Dichteströmungen folgend saugen Dichteströmungen über ihre Ränder Flüssigkeit aus ihrer Umgebung ein. Das Maß, in dem dieses Einsaugen stattfindet, hängt direkt davon ab, wie hoch die Gesamtenergie ist, die die Strömung an ihrem Eintritt in ein Umgebungsfluid hat. Dieses Einsaugen von Umgebungsfluid, das den transportierten Volumen- und' Massenstrom in der Dichteströmung erhöht, nennt man Strahleinmischung, Einmischung oder englisch Entrainment. Ein Volumenstrom $Q$ wächst durch Einmischung auf seinem Strömungsweg vom Einlaufvolumenstrom $Q_i$ auf einen erhöhten Volumenstrom $Q = Q_i + \Delta Q$ an. Da Absetzbecken ihre Funktion um so effizienter erfüllen, je kleiner $Q$ ist, erhöht jede Maßnahme, die die Energie der einströmenden Suspension am Einlauf reduziert, die Effizienz des Absetzbeckens.

Das Einmischverhalten einer Dichteströmung kann man technisch nur über ein begrenztes Gebiet, das so genannte Nahfeld des technischen Bauwerks beeinflussen; im Fernfeld des Bauwerks ergibt sich die Einmischung aus den örtlich vorliegenden physikalischen Parametern der Dichtedifferenz der lokalen Dichte $\rho_l$ zur Dichte der Umgebung $\rho_a$, dem örtlichen Druckgradienten, der Mächtigkeit $h_D$ der Dichteströmung und folglich ihrer örtlichen Fließgeschwindigkeit.

Die an einem Einlauf anliegende Gesamtenergie kann als Summe ihrer einzelnen Anteile geschrieben werden:

$$E_{tot} = (E_{pk})_{min} + E_b + \Delta E_{pk} + \Delta E_U$$

Die durchströmte Einlauffläche $A_i$ eines Einlaufbauwerks kann bei einer über die Einlaufbreite $b_i$ gleich bleibenden Einlaufhöhe $h_i$ berechnet werden zu $A_i = h_i \cdot b_i$. Der Volumenstrom pro Einlaufbreite ergibt sich zu $q_i = Q_i/b_i$, die mittlere Einlaufgeschwindigkeit zu $U_i = q_i/h_i$.

Ist die örtliche Energie $E_{tot} = (E_{pk})_{min} + \Delta E$ um einen Energieüberschuss $\Delta E = E_b + \Delta E_{pk} + \Delta E_U$ höher als die minimal erforderliche Energie $(E_{pk})_{min}$, um eine Dichteströmung mit gegebenem Volumenstrom $Q$ zu bewegen, führt dies zu Einmischung. $(E_{pk})_{min}$ stellt sich für Absetzbecken nach dem physikalischen Gesetz der kleinsten Energie ein, wenn die densimetrische Froudezahl $Fr_D = U_i/(g' \cdot h_i)^{1/2} = 1$ bei gleichzeitig breitest möglichem Einlauf ist und der Einlauf auf Trennspiegelhöhe liegt. Die lokal tatsächlich wirksame Gravitationskonstante $g'$ ergibt sich aus der Differenz der lokalen Dichte $\rho_l$ zur Umgebungsdichte $\rho_a$ zu $g' = (\rho_l - \rho_a)/\rho_a \cdot g$.

$E_b$ ist der Betrag, um den sich der Energieüberschuss $\Delta E$ am Einlauf erhöht, falls nicht in Höhe des Trennspiegels eingeleitet wird: '

Wird eine Suspension der Dichte $\rho_S$ unterhalb des sich in Höhenlage $h_S$ befindlichen Trennspiegels in einer vertikalen Entfernung $h_0$ zum Punkt gleicher Dichte der Umgebungsphase in eine Umgebungsphase höherer Dichte eingeleitet, hat sie aufgrund ihrer geringeren Dichte Auftriebsenergie $E_b$ und wird folglich aus der Horizontalen mit dem Winkel $\Phi$ nach oben umgelenkt. Je tiefer die Einleitung unterhalb des Trennspiegels liegt, je größer also ihr Abstand $h_0$ zum Trennspiegel in Höhe $h_S$ ist, um so größer ist die Auftriebsenergie $E_b$ und folglich die Einmischungsrate. Aus diesen Betrachtungen folgt aus energetischer Sicht die Forderung, den Einlauf in ein Absetzbecken so auszugestalten, dass die Auftriebsenergie für schwankende Höhenlagen $h_S$ des Trennspiegels durch Adaption der relativen Höhenlage $h_0$ der Einlauffläche knapp unter dem Trennspiegel mit $h_0 \approx 0$ und somit $E_b \approx 0$ minimiert wird.

$\Delta E_{pk}$ ist der Betrag, um den sich der Energieüberschuss $\Delta E$ am Einlauf erhöht, falls nicht das optimale Verhältnis aus kinetischer und potentieller Energie mit $Fr_D = 1$ gegeben ist. Die energetisch optimale Einlaufhöhe $h_i$ ergibt sich mit $Fr_D = 1$ zu $h_i = (q_i^2/g')^{1/3}$. Die Froudezahl ist für veränderliche Einlaufbedingungen somit beherrschbar durch Adaption der Höhe $h_i$ des Einlaufs.

$\Delta E_U$ ist der Betrag, um den sich der Energieüberschuss $\Delta E$ am Einlauf erhöht, falls die Breite $b_i$ des Einlaufs kleiner als die maximal mögliche Breite ist. Die maximal mögliche Breite ergibt sich aus geometrischer Betrachtung mit dem technischen Merkmal eines um die Peripherie umlaufend angeordneten Einlaufs.

Einen positiven Effekt auf die Ablaufwerte eines Absetzbeckens kann die Strahleinmischung dann haben, wenn sie am Einlauf der Suspension dafür sorgt, dass sich die einlaufende Suspension in begrenztem Maße mit Suspension höherer Dichte aus dem Absetzbecken anreichert und somit die größeren Flocken der Umgebungssuspension kleinere Partikel der Zulaufsuspension zurückhalten können und damit eine so genannte Flockenfilterwirkung auftritt. Flockenfilterwirkung ist ein erwünschter Prozess, der zum Beispiel in Bemessungsregeln für Nachklärbecken gefordert wird.

Strömungen in Absetzbecken sind nach ihrer Strömungsrichtung zu unterscheiden in Quellen- oder Senkenströmungen. Bei Quellenströmungen'wird das Fluid auf der Fließstrecke durch ständig wachsenden Druck kontinuierlich verzögert, bei Senkenströmungen durch ständig sinkenden Druck kontinuierlich beschleunigt. Eine Senkenströmung verläuft erheblich stabiler und folglich deutlich unempfindlicher bezüglich Störungen. Störungen werden in Absetzbecken verursacht durch zeitlich veränderliche Fließgeschwindigkeiten $U_i$ am Einlauf. Diese prägen dem dichtegeschichteten Flüssigkeitskörper Impulskräfte auf, die proportional zur Geschwindigkeit $U_i$ sind. Bei zentrischem Einlauf ist $U_i$ sehr groß und die somit großen destabilisierenden Störungen werden einer ohnehin instabilen Strömung überlagert. Bei peripherem Einlauf ist die Geschwindigkeit $U_i$ deutlich kleiner und somit die Impulskraft drastisch reduziert und wird zudem unkritisch einer stabilen Strömung überlagert.

Das Phänomen, dass die Strahleinmischung mit kleiner werdendem $h_0$ und somit kleiner werdender Auftriebsenergie $E_b$ sinkt, macht sich das in der Patentschrift DE 197 58 360 C2 und der zugehörigen Offenlegungsschrift EP 0 923 971 A1 beschriebene Verfahren zu Nutze, indem es $h_0$ an einem zentrischen Einlaufbauwerk für runde Absetzbecken in Stufen minimiert. Eine Minimierung von $\Delta E_{pk}$ und $\Delta E_U$ wird hier nicht berücksichtigt. Das Phänomen der Einmischung kann damit reduziert werden, bleibt aber signifikant vorhanden. Eine Adaption der Höhenlage $h_0$ des Einlaufs in Stufen ist für ein zentrisches Einlaufbauwerk aber sehr kritisch zu sehen, da die Adaption bei Anfahren und Außerbetriebnahme einer Stufe stark diskontinuierliche Strömungsgeschwindigkeiten und somit besonders große destabilisierende Impulsstöße auf eine physikalisch ohnehin instabile Quellenströmung aufprägt. Dies führt potentiell zu deutlich schlechteren Ablaufqualitäten.

Das Phänomen, dass die Strahleinmischung mit größer werdendem $b_i$ und somit kleiner werdender Energie $\Delta E_U$ sinkt, macht sich zum Beispiel das in der Offenlegungsschrift DE 198 30 311 A1 beschriebene Verfahren zu Nutze, in dem es den Einlauf peripher, also am Rand des Absetzbeckens, in Sohlnähe anordnet. Eine Minimierung von $\Delta E_{pk}$ wird hier nicht berücksichtigt und $E_b$ durch sohlnahe Einleitung sogar maximiert. Der störende Effekt der Einmischung bleibt somit auch hier in hohem Maße erhalten.

Die DE 1045931 offenbart ein Absetzbecken für zweiphasige Suspensionen umfassend einen höhenveränderlichen Einlauf, der geeignet ist im Bereich des Trennspiegels in das Absetzbecken zu münden, wobei die relative Höhenlage des Einlaufs an die jeweilige Höhenlage des Trennspiegels anpassbar ist.

Angesichts der beschriebenen Nachteile im Stand der Technik stellt sich das technische Problem, ein optimiertes Absetzbecken vorzuschlagen, das sich durch höhere Abtrennleistung, bessere Ablaufwerke, geringere interne Belastung und störungsarmen Betrieb auszeichnet.

Die vorliegende Erfindung beruht auf der Erkenntnis, dass sowohl destabilisierende Impulsstöße als auch die Einlaufenergie

$$E_{tot} = (E_{pk})_{min} + E_b + \Delta E_{pk} + \Delta E_U$$

am Einlauf weitest möglich verringert bzw. auf das technisch mögliche Minimum reduziert werden muss. Damit wird auch die von der Einlaufenergie abhängige Strahleinmischung bei höchst möglicher Stabilität der Strömung reduziert.

Gelöst wird die Aufgabe durch ein Absetzbecken gemäß Patentanspruch 1.

Erfolgt bei einem Einlaufbauwerk die Adaption der relativen Höhenlage $h_0$ des Einlaufs an die jeweilige Höhenlage $h_S$ des Trennspiegels stufenlos, so wird hierdurch die kritische destabilisierende Impulsänderung minimiert. Kombiniert man die Minimierung der relativen Höhenlage $h_0$ mit einer peripheren Einleitung, so stellt sich aufgrund der maximierten Einlaufbreite $b_i$ bei gleichzeitig optimierter Einlaufhöhe $h_i$ überraschend keine Einmischung in den Einlaufstrahl mehr ein. In diesem Fall ergibt sich also ein verringerter Volumenstrom in der Hauptströmung, so dass die Belastung des Beckens sinkt, statt durch Einmischung anzusteigen. Das Absetzbecken kann folglich kleiner gebaut oder, bei vorgegebener Größe, höher belastet werden.

Vorteilhafte Ausgestaltungen der Erfindung ergeben sich aus den Unteransprüchen.

Lässt sich nicht nur die relative Höhenlage $h_0$ des Einlaufs, sondern zusätzlich auch die Höhe $h_i$ des Einlaufquerschnitts variieren, so lässt sich je nach Volumenstrom und/oder Dichte der eingeleiteten Suspenion eine destabilisierende Impulsänderung im Bereich des Einlaufs noch wirksamer verhindern.

Eine besonders vorteilhafte Ausführung eines höhenveränderlichen peripheren Einlaufs ergibt sich, wenn man die Wand des Beckens in mindestens zwei Höhen ganz oder teilweise umlaufend schlitzförmig durchbricht und mittels Verschlussorganen den Einlauf durch die Schlitze in Stufen höhenverschieblich kontrolliert.

Eine weitere vorteilhafte Ausführung eines höhenveränderlichen peripheren Einlaufs ergibt sich, wenn man an der Peripherie eines Beckens mindestens zwei, ganz oder teilweise umlaufende Rohre übereinander anordnet, deren Beschickung steuer- oder regelungstechnisch ganz oder teilweise auf einzelne Rohre aufgeteilt werden kann. Die Rohre müssen spül- oder molchbar sein, damit die Suspension in temporär nicht beaufschlagten Rohren vollständig ausgetragen werden kann. Sonst ergeben sich zum Beispiel bei biochemisch aktiven Suspensionen, wie sie in Nachklärbecken einströmen, bei langem Aufenthalt im nicht aktiven Rohr nachteilhafte Zersetzungsvorgänge.

Die für die Flockenfilterwirkung positive Strahleinmischung aus Bereichen höherer Dichte kann man fördern, indem man durch ein Strömungsleitschild über dem Einlauf dafür sorgt, dass sich eine Einmischung in den zulaufenden Suspensionsstrom ausschließlich aus dem unteren Bereich des Absetzbeckens mit Suspension höherer Dichte versorgen kann. Durch eine Neigung des Strömungsleitschildes kann der Winkel Φ begrenzt werden, mit dem sich die Dichteströmung nach oben bewegt. So wird auch die Einmischung kontrolliert. Führt man ein oder mehrere Strömungsleitschilde so aus, dass deren Winkel Φ im Betrieb variiert werden kann, ist es möglich, auch für mehrere statische Einlaufhöhen die Strahleinmischung variabel zu kontrollieren und den einlaufenden Dichtestrom kontrolliert an den Trennspiegel zu leiten.

Da die geometrische Form der Oberfläche keinen qualitativen Einfluss auf die für die Erfindung relevanten physikalischen Phänomene hat, ist es möglich, dass die Oberfläche des Absetzbeckens in runder oder rechteckiger Form ausgebildet ist.

Auch Sonderformen der Beckenoberfläche sind möglich.

Da die Form des Abzugs der leichteren Phase keinen qualitativen Einfluss auf die für die Erfindung relevanten physikalischen Phänomene hat, kann der Abzug der leichteren Phase in Form von Überfallschneiden, offenen oder getauchten Ablaufrohren oder anderweitig erfolgen.

Da auch die Form des Abzugs der schwereren Phase keinen qualitativen Einfluss auf die für die Erfindung relevanten physikalischen Phänomene hat, kann der Abzug der schwereren Phase gravitativ mit oder ohne Unterstützung von Räumern, mit geneigter oder horizontaler Sohle des Absetzbeckens, durch Absaugen oder anderweitig erfolgen.

Aus konstruktiven und geometrischen Gründen ist es möglich, dass der Trennspiegel bei sehr geringer Belastung des Absetzbeckens für eine Einlaufhöhe am untersten einstellbaren Punkt zeitweise unter die Einlauffläche abfällt.

Ausführungsbeispiele der Erfindung werden nachstehend unter Bezugnahme auf die beigefügten Zeichnungen näher beschrieben. Es zeigen:

Fig. 1a - 1c    Ein rundes Absetzbecken mit zentralem Einlaufbauwerk, höhenverschieblichem Zulaufrohr und einstellbarer Umlenkplatte, welches nicht erfindungsgemäß ist und nicht unter die Ansprüche fällt;

Fig. 1d    ein rechteckiges Absetzbecken mit einem am linken Rand angeordneten Einlaufbauwerk, höhenverschieblicher Trennwand und einstellbarer Umlenkplatte;

Fig. 2a - 2c    ein rundes Absetzbecken mit peripher angeordnetem Zulaufbecken, Trennwand und teleskopierbarer Begrenzungswand;

Fig. 2d    ein rechteckiges Absetzbecken mit am Rand angeordnetem Zulaufbecken, Trennwand und teleskopierbarer Begrenzungswand;

Fig. 3a, 3b    ein rundes Absetzbecken mit peripher angeordneter höhenverschieblicher Einlaufleitung;

Fig. 3c    ein rechteckiges Absetzbecken mit am Rand angeordneter höhenverschieblicher Einlaufleitung;

Fig. 4a - 4c    ein rundes Absetzbecken mit am Rand angeordnetem Zulaufbecken und Trennwand, die Schlitze aufweist;

Fig. 4d    ein rechteckiges Absetzbecken mit am Rand angeordnetem Zulaufbecken und Trennwand, die Schlitze aufweist;

Fig. 5    ein rechteckiges Absetzbecken mit am Rand angeordnetem Zulaufbecken, teleskopierbarer Trennwand und Umlenkplatte;

Fig. 6a, 6b    ein rundes Absetzbecken, an dessen Rand zwei Einlaufrohre übereinander angeordnet sind.

Fig. 6c    ein rechteckiges Absetzbecken, an dessen Rand zwei Einlaufrohre übereinander angeordnet sind.

Alle Abbildungen zeigen Absetzbecken in stark vereinfachten Vertikalschnitten. Gleiche Elemente sind jeweils mit denselben Bezugszeichen versehen.

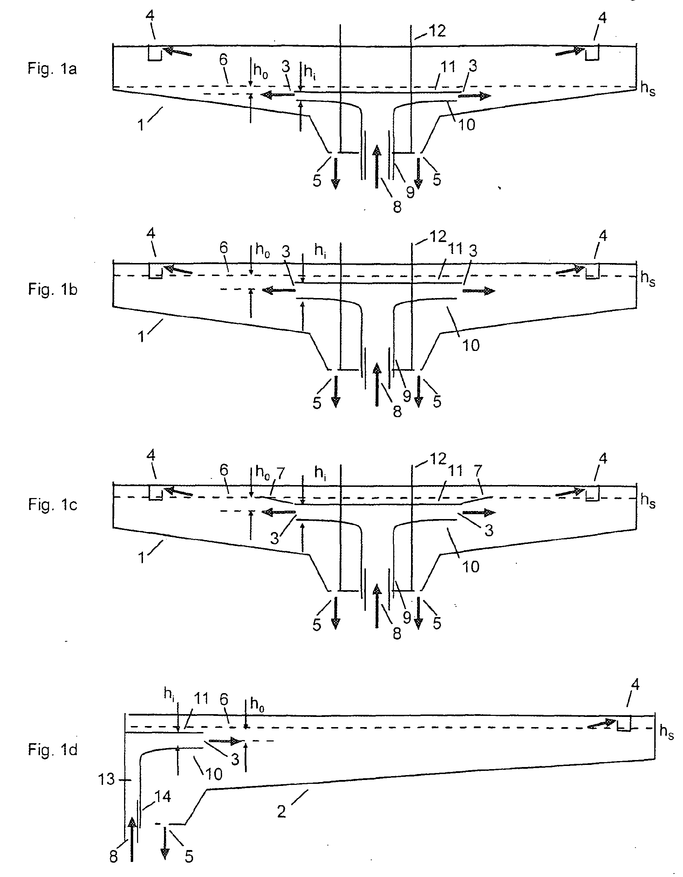

Das in den Figuren 1a bis 1c beispielhaft dargestellte runde Absetzbecken hat ein zentrisches Einlaufbauwerk mit einem Einlauf 3 für eine Suspension aus Klärschlamm und Wasser. Der schwerere Schlamm setzt sich nach unten ab, während im oberen Teil des Absetzbeckens 1 klares Wasser steht. Das geklärte Wasser wird von der Oberfläche durch einen Klarwasserabzug 4 abgezogen. Der nach unten abgesetzte Schlamm wird an der tiefsten Stelle des Absetzbeckens 1 durch einen Schlammabzug 5 abgezogen. Zwischen der schweren Phase, also dem Schlamm, und der leichten Phase, also dem Klarwasser, bildet sich ein Trennspiegel 6. Ein oberhalb des Einlaufs 3 angebrachtes Strömungsleitschild 7 verhindert Einmischung von oben.

Die relative Höhenlage $h_0$ des Einlaufs 3 ist definiert durch den Abstand zum Trennspiegel 6. Der Querschnitt des Einlaufs 3 hat die Höhe $h_i$.

Eine Suspensionszuleitung 8 durchsetzt den Boden des Absetzbeckens 1 und geht in ein vertikales Zulaufrohr 9 über. Das obere Ende des Zulaufrohrs 9 geht stetig in eine horizontale Einlauffläche 10 über. Das Zulaufrohr 9 ist teleskopierbar ausgebildet, wodurch sich die Höhenlage $h_0$ des Einlaufs relativ zum Trennspiegel 6 stufenlos verändern lässt. Über der Einlauffläche 10 ist eine Umlenkplatte 11 parallel und im Abstand angeordnet. Mittels Hubstangen 12 lässt sich die Umlenkplatte 11 in vertikaler Richtung nach oben oder unten verschieben. Dadurch kann die Höhe $h_A$ des Einlaufquerschnitts in Abhängigkeit des Volumenstroms und/oder der Dichte der eingeleiteten Suspension verändert werden.

Bei dem in Figur 1d dargestellten rechteckigen Absetzbecken ist der Einlauf 3 am linken Rand angeordnet. Die Suspensionszuleitung 8 geht in ein Zulaufbecken 13 über, das sich entlang des linken Randes des Absetzbeckens 2 erstreckt. Zwischen dem Zulaufbecken 13 und dem Absetzbecken 2 ist eine Trennwand 14 angeordnet. Die Trennwand 14 geht an ihrem oberen Rand in eine horizontale Einlauffläche 10 über. Oberhalb der Einlauffläche 10 ist eine Umlenkplatte 11 parallel und in einstellbarem Abstand angeordnet. Der Abstand zwischen der Einlauffläche 10 und der Unterseite der Umlenkplatte 11 definiert die Höhe $h_i$ des Einlaufquerschnitts. Die Trennwand 14 ist höhenverschieblich ausgeführt, wodurch eine stufenlose Anpassung der relativen Höhenlage $h_0$ des Einlaufs 3 an die jeweilige Höhenlage $h_S$ des Trennspiegels 6 erreicht wird.

In dem in Figur 1a dargestellten Betriebszustand liegt der Trennspiegel 6 relativ tief. Entsprechend tief ist die Höhenlage $h_0$ des Einlaufs 3 eingestellt. Ferner ist in diesem Betriebszustand der Einlaufquerschnitt dadurch relativ klein gehalten, dass der Abstand zwischen der Einlauffläche 10 und der Umlenkplatte 11 relativ klein ist, wodurch sich eine vergleichsweise kleine Höhe $h_i$ des Einlaufquerschnitts ergibt. In Figur 1b liegt hingegen der Trennspiegel 6 wesentlich höher. Die Höhenlage $h_0$ des Einlaufs 3 wurde entsprechend nach oben gefahren, so dass der Einlauf 3 wiederum knapp unterhalb der Höhenlage $h_S$ des Trennspiegels liegt. Auch die Höhe $h_i$ des Einlaufquerschnitts wurde erhöht, indem der Abstand zwischen Einlauffläche 10 und Umlenkplatte 11 vergrößert ist.

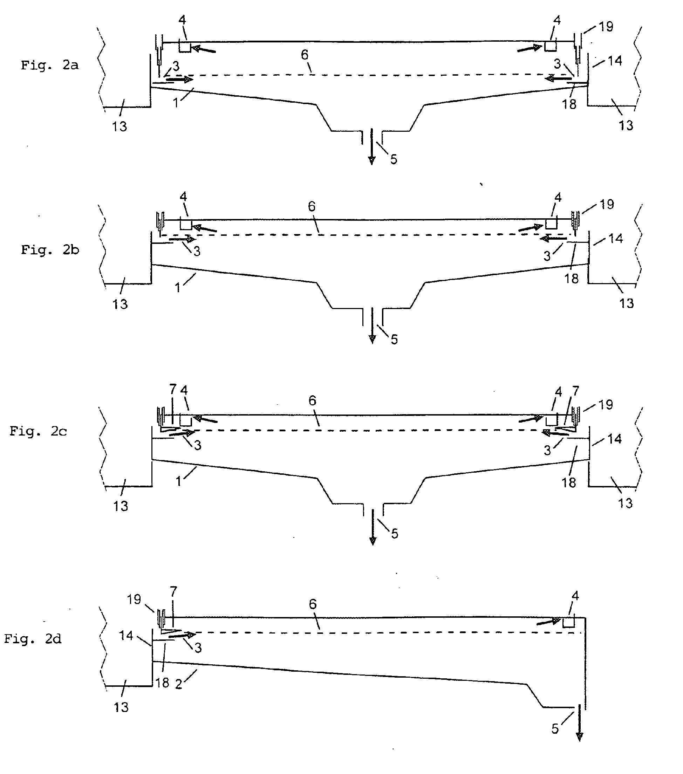

Eine prinzipiell ähnliche Konstruktion zeigen die Figuren 2a bis 2c für ein rundes Absetzbecken 2 mit peripherer Einleitung. Entlang des Randes des Absetzbeckens 2 erstreckt sich ein Zulaufbecken 13. Zwischen dem Zulaufbecken 13 und dem Absetzbecken 2 ist eine Trennwand 14 angeordnet. An der Trennwand 14 ist eine horizontale Einlaufplatte 18 höhenverstellbar angeordnet. Über der Einlaufplatte 18 ist eine Begrenzungswand 19 im Abstand und parallel zu der Trennwand 14 vorgesehen. Die Begrenzungswand 19 ist teleskopierbar ausgeführt. Der Abstand zwischen dem unteren Rand der Begrenzungswand 19 und der Oberseite der Einlaufplatte 18 definiert die Höhe des Einlaufquerschnitts.

Wie sich aus dem Vergleich der Figuren 2a, 2b und 2c ergibt, lässt sich durch Verschieben der Einlaufplatte 18 und Teleskopieren der Begrenzungswand 19 sowohl die relative Höhenlage des Einlaufs 3 an unterschiedliche Höhenlagen des Trennspiegels 6 anpassen wie auch die Höhe des Einlaufquerschnitts adaptieren.

Figur 2d verdeutlicht, wie eine prinzipiell gleiche Konstruktion bei einem rechteckigen Absetzbecken 2 ausgeführt sein kann. Hier ist das Zulaufbecken 13 am linken Rand des Absetzbeckens 2 angeordnet.

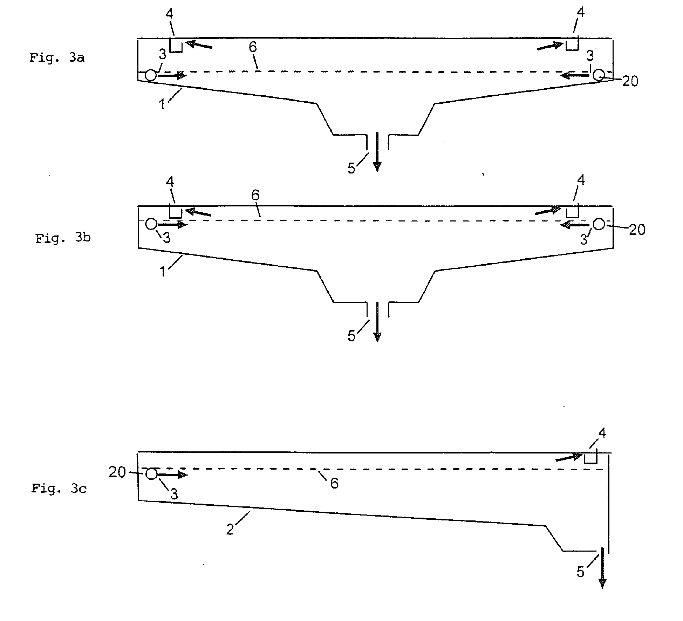

Bei dem runden Absetzbecken 1 gemäß den Figuren 3a und 3b ist die Suspensionszuleitung mit einer horizontalen ringförmigen Einlaufleitung 20 verbunden, deren Wandung (nicht dargestellte) Auslauföffnungen hat. Die Einlaufleitung 20 verläuft entlang des Randes des Absetzbeckens 1 und ist in der Höhe verschieblich.

Ist das Absetzbecken 2 rechteckig ausgeführt, wie in Figur 3c dargestellt, so erstreckt sich die Einlaufleitung 20 parallel zum Rand des Absetzbeckens 2.

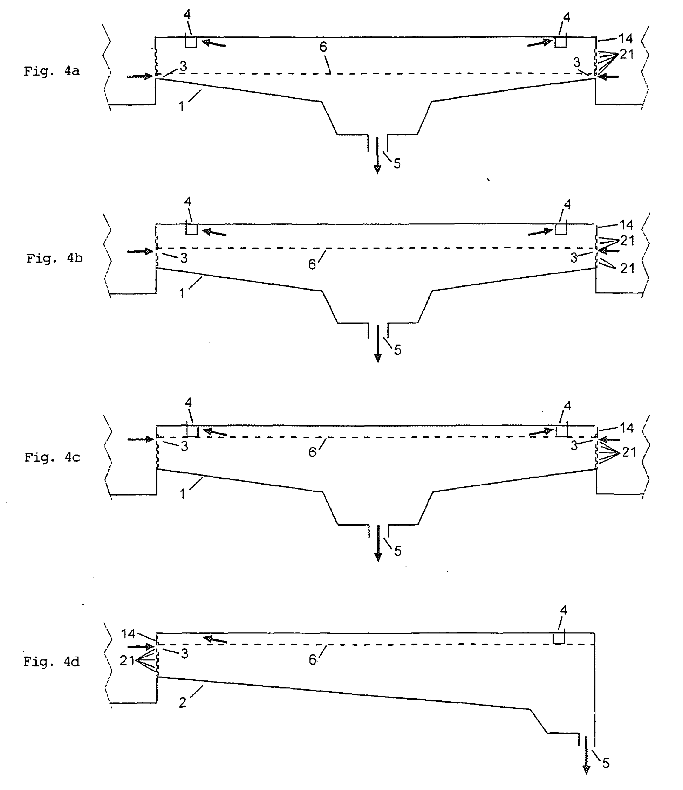

Bei dem runden Absetzbecken gemäß den Figuren 4a bis 4d weist die Trennwand 14 mehrere übereinander angeordnete Schlitze 21 auf. Diese Schlitze 21 sind durch Verschlusselemente (nicht dargestellt) einzeln oder in Kombination ganz oder teilweise öffen- und schließbar. Hierdurch lässt sich die Höhenlage des Einlaufs 3 an unterschiedliche Höhenlagen des Trennspiegels 6 anpassen.

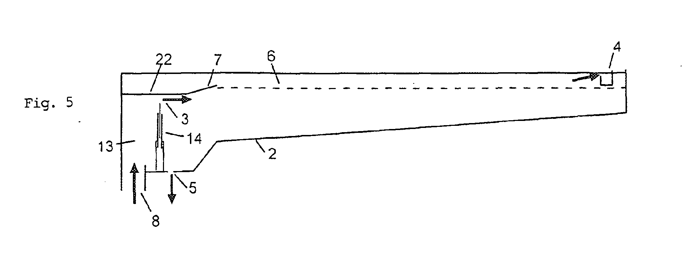

Bei der Ausführungsform gemäß Figur 5 ist die Trennwand 14 zwischen dem rechteckigen Absetzbecken 2 und dem Zulaufbecken 13 teleskopierbar ausgeführt. Dadurch ist die Höhe der Trennwand 14 einstellbar. Nach oben hin ist das Zulaufbecken 13 durch eine höhenverschiebliche horizontale Deckplatte 22 abgedeckt, welche die Trennwand 14 zum Absetzbecken 2 hin überragt. Der Abstand zwischen dem oberen Rand der Trennwand 14 und der Unterseite der Deckplatte 22 definiert die variable Höhe des Einlaufquerschnitts. Da die Deckplatte 22 die Trennwand 14 überragt, dient sie auch der Strömungsleitung, welche gegebenenfalls durch ein zusätzliches Strömungsleitschild 7 verlängert werden kann.

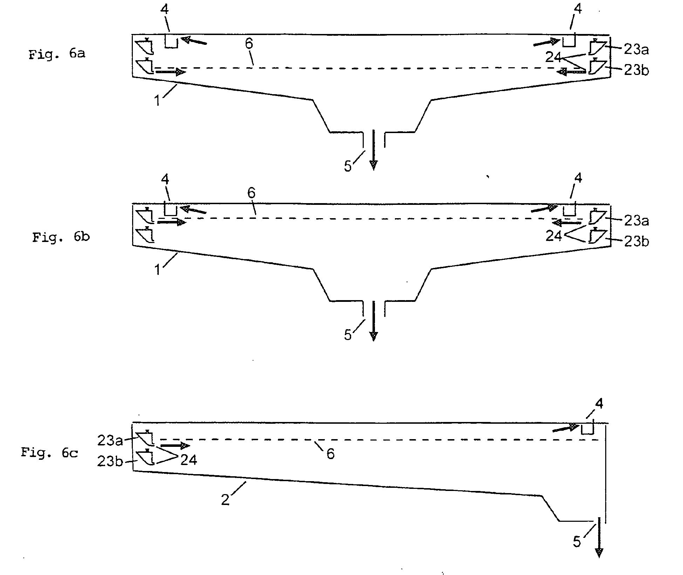

Gemäß den Figuren 6a und 6b kann ein rundes Absetzbecken 1 auch zwei übereinander angeordnete Einlaufrohre 23a und 23b an der Peripherie aufweisen. Nach innen, zur Mitte des Absetzbeckens 1 hin, weisen die Einlaufrohre 23a, 23b umlaufende Einlaufschlitze 24 auf, durch welche die Suspension einläuft. Je nachdem, ob der Trennspiegel 6 niedrig (Fig. 6a) oder hoch (Fig. 6b) liegt, erfolgt die Beschickung durch das untere Einlaufrohr 23b oder das obere Einlaufrohr 23a.

Bei dem rechteckigen Absetzbecken 2 gemäß Fig. 6c erstrecken sich zwei übereinander angeordnete Einlaufrohre 23a, 23b entlang des äußeren Randes des Absetzbeckens 2.

Zusammenstellung der Bezugszeichen

| | |
|---|---|
| 1 | Rundes Absetzbecken |
| 2 | Rechteckiges Absetzbecken |
| 3 | Einlauf |
| 4 | Klarwasserabzug |
| 5 | Schlammabzug |
| 6 | Trennspiegel |
| 7 | Strömungsleitschild |
| 8 | Suspensionszuleitung |
| 9 | Zulaufrohr |
| 10 | Einlauffläche |
| 11 | Umlenkplatte |
| 12 | Hubstange |
| 13 | Zulaufbecken |
| 14 | Trennwand |
| 15 | Eintragsrohr |
| 16 | Ringplatte |
| 17 | Rohrring |
| 18 | Einlaufplatte |
| 19 | Begrenzungswand |
| 20 | Einlaufleitung |
| 21 | Schlitz (in 14) |
| 22 | Deckplatte |
| 23a, 23b | Einlaufrohre |
| 24 | Einlaufschlitz (in 23a, 23b) |

**Patentansprüche**

1. Absetzbecken für eine zweiphasige Suspension, insbesondere für Klärschlamm, in dem sich durch gravitative Trennung die schwere Phase nach unten absetzt und sich ein Trennspiegel (6) zwischen der schweren und der leichten Phase bildet, umfassend eine Suspensionszuleitung (8) und mindestens einen höhenveränderlichen Einlauf (3), der geeignet ist im Bereich des Trennspiegels (6) in das Absetzbecken (1, 2) zu münde wobei die relative Höhenlage $h_o$ des Einlaufs (3) an die jeweilige Höhenlage $h_S$ des Trennspiegels (6) anpassbar is, **dadurch gekennzeichnet , dass**

   - der Einlauf (3) im Bereich des Randes des Absetzbeckens (1, 2) angeordnet ist

2. Absetzbecken nach Anspruch 1, **dadurch gekennzeichnet , dass**

   - die Suspensionszuleitung (8) ein Zulaufbecken (13) umfasst, das sich entlang wenigstens eines Abschnitts des Rands des Absetzbeckens (1, 2) erstreckt;
   - zwischen dem Zulaufbecken (13) und dem Absetzbecken (1, 2) eine Trennwand (14) angeordnet ist.

3. Absetzbecken nach Anspruch 2, **dadurch gekennzeichnet , dass**

   - die Trennwand (14) höhenverschieblich oder teleskopierbar ausgeführt ist;
   - die Trennwand (14) an ihrem oberen Rand in eine horizontale Einlauffläche (10) übergeht;
   - über der Einlauffläche (10) eine Umlenkplatte (11) parallel und in einstellbarem Abstand angeordnet ist;
   - der Abstand zwischen der Einlauffläche (10) und der Unterseite der Umlenkplatte (11) die Höhe $h_i$ des Einlaufquerschnitts definiert.

4. Absetzbecken nach Anspruch 2, **dadurch gekennzeichnet , dass**

   - an der Trennwand (14) eine im wesentlichen horizontale Einlaufplatte (18) höhenverstellbar angeordnet ist;
   - über der Einlaufplatte (18) eine Begrenzungswand (19) im Abstand und im wesentlichen parallel zu der Trennwand (14) angeordnet ist;
   - die Begrenzungswand (19) höhenverschieblich oder teleskopierbar ausgeführt ist;
   - der Abstand zwischen dem unteren Rand der Begrenzungswand (19) und der Oberseite der Einlaufplatte (18) die Höhe $h_i$ des Einlaufquerschnitts definiert.

5. Absetzbecken nach Anspruch 2, **dadurch gekennzeichnet , dass**

   - die Trennwand (14) mehrere übereinander angeordnete Schlitze (21) aufweist;
   - die Schlitze (21) mittels Verschlusselementen einzeln oder in Kombination ganz oder teilweise öffen- und schließbar sind.

6. Absetzbecken nach Anspruch 2, **dadurch gekennzeichnet , dass**

   - die Höhe der Trennwand (14) einstellbar ist;
   - das Zulaufbecken (13) nach oben hin durch eine höhenverschiebliche horizontale Deckplatte (22) abgedeckt ist;
   - der Abstand zwischen dem oberen Rand der Trennwand (14) und der Unterseite der Deckplatte (22) die variable Höhe $h_i$ des Einlaufquerschnitts definiert.

7. Absetzbecken nach Anspruch 1, **gekennzeichnet durch** eine höhenverschiebliche Einlaufleitung (20), deren Wandung Auslauföffnungen hat.

8. Absetzbecken nach Anspruch 1, **gekennzeichnet durch** wenigstens zwei übereinander angeordnete Einlaufrohre (23a, 23b) mit je wenigstens einem Einlaufschlitz (24).

**9.** Absetzbecken nach einem der Ansprüche 1 bis 8, **dadurch gekennzeichnet , dass** über dem Einlauf wenigstens ein Strömungsleitschild (7) angeordnet ist.

**10.** Absetzbecken nach Anspruch 9, **dadurch gekennzeichnet , dass** sich das Strömungsleitschild (7) unter einem spitzen Neigungswinkel nach oben in Richtung des Trennspiegels (6) erstreckt.

**11.** Absetzbecken nach Anspruch 10, **dadurch gekennzeichnet , dass** der Neigungswinkel des Strömungsleitschildes (7) einstellbar ist.

**12.** Absetzbecken nach Anspruch 11, **gekennzeichnet durch** eine Einrichtung zur Steuerung des Neigungswinkels des Strömungsleitschilds (7) in Abhängigkeit der relativen Höhenlage $h_0$ des Einlaufs (3).

**Claims**

**1.** A settling tank for a two-phase suspension, in particular for sewage sludge, in which the heavy phase settles downwards by gravitational separation and a separation level (6) is formed between the heavy and the light phase, comprising a suspension feed line (8) and at least one height-adjustable inlet (3) which is suitable to open out in the region of the separation level (6) into the settling tank (1, 2), wherein the relative height $h_0$ of the inlet (3) can be adapted to the respective height $h_s$ of the separation level (6), **characterized in that**

- the inlet (3) is arranged in the region of the edge of the settling tank (1, 2) and extends along the edge.

**2.** The settling tank according to claim 1, **characterized in that**

- the suspension feed line (8) comprises a supply tank (13) which extends along at least one section of the edge of the settling tank (1, 2);
- between the supply tank (13) and the settling tank (1, 2), a partition wall (14) is arranged.

**3.** The settling tank according to claim 2, **characterized in that**

- the partition wall (14) is configured in a height-displaceable or telescopic manner;
- the partition wall (14) merges at its upper edge into a horizontal inlet area (10);
- above the inlet area (10), a deflection plate (11) is arranged parallelly and at an adjustable distance;
- the distance between the inlet area (10) and the lower side of the deflection plate (11) defines the height $h_i$ of the inlet cross-section.

**4.** The settling tank according to claim 2, **characterized in that**

- on the partition wall (14), a substantially horizontal inlet plate (18) is arranged in a height-adjustable manner;
- above the inlet plate (18), a boundary wall (19) is arranged at a distance and substantially parallel to the partition wall (14);
- the boundary wall (19) is configured in a height-displaceable and telescopic manner;
- the distance between the lower edge of the boundary wall (19) and the upper side of the inlet plate (18) defines the height $h_i$ of the inlet cross-section.

**5.** The settling tank according to claim 2, **characterized in that**

- the partition wall (14) has a plurality of slots (21) arranged one above the other;
- the slots (21), individually or in combination, can be completely or partially opened and closed by means of closure elements.

**6.** The settling tank according to claim 2, **characterized in that**

- the height of the partition wall (14) is adjustable;
- the supply tank (13) is covered on top by a height-displaceable horizontal cover plate (22);
- the distance between the upper edge of the partition wall (14) and the lower side of the cover plate (22) defines the variable height $h_i$ of the inlet cross-section.

**7.** The settling tank according to claim 1, **characterized by** a height-displaceable inlet line (20), the wall of which has outlet openings.

**8.** The settling tank according to claim 1, **characterized by** at least two inlet pipes (23a, 23b) which are arranged one above the other and which each have at least one inlet slot (24).

**9.** The settling tank according to any one of the claims 1 to 8, **characterized in that** above the inlet, at least one flow guide plate (7) is arranged.

**10.** The settling tank according to claim 9, **characterized in that** the flow guide plate (7) extends upwardly towards the separation level (6) at an acute angle of inclination.

11. The settling tank according to claim 10, **characterized in that** the angle of inclination of the flow guide plate (7) is adjustable.

12. The settling tank according to claim 11, **characterized by** a device for controlling the angle of inclination of the flow guide plate (7) depending on the relative height $h_0$ of the inlet (3).

**Revendications**

1. Bassin de décantation pour une suspension en deux phases, notamment pour des boues de curage, dans lequel par séparation par gravitation, la phase lourde se dépose vers le bas et il se forme un niveau de séparation (6) entre la phase lourde et la phase légère, comprenant un conduit d'alimentation de la suspension (8) et au moins une entrée (3) à hauteur variable, qui est appropriée pour déboucher dans la région du niveau de séparation (6) dans le bassin de décantation (1, 2) le niveau de hauteur relatif $h_o$ de l'entrée (3) étant adaptable au niveau de hauteur $h_s$ respectif du niveau de séparation (6), **caractérisé en ce que**

   - l'entrée (3) est placée dans la région du bord du bassin de décantation (1, 2) et s'étend le long du bord.

2. Bassin de décantation selon la revendication 1, **caractérisé en ce**

   - le conduit d'alimentation de la suspension (8) comprend un bassin d'arrivée (13) qui s'étend le long d'au moins une partie du bord du bassin de décantation (1, 2) ;
   - entre le bassin d'arrivée (13) et le bassin de décantation (1, 2) est placée une paroi de séparation (14).

3. Bassin de décantation selon la revendication 2, **caractérisé en ce**

   - la paroi de séparation (14) est conçue de sorte à être déplaçable en hauteur ou télescopique ;
   - par son bord supérieur, la paroi de séparation (14) passe dans une surface d'entrée (10) horizontale ;
   - au dessus de la surface d'entrée (10), une plaque déflectrice (11) est disposée à la parallèle et avec un écart réglable ;
   - l'écart entre la surface d'entrée (10) et la face inférieure de la plaque déflectrice (11) définit la hauteur $h_i$ de la section transversale d'entrée.

4. Bassin de décantation selon la revendication 2, **caractérisé en ce que**

   - sur la paroi de séparation (14), une plaque d'entrée (18) sensiblement horizontale est disposée de sorte à être réglable en hauteur ;
   - au-dessus de la plaque d'entrée (18), une paroi de délimitation (19) est disposée avec un écart et sensiblement à la parallèle de la paroi de séparation (14) ;
   - la paroi de délimitation (19) est conçue de sorte à être déplaçable en hauteur ou télescopique ;
   - l'écart entre le bord inférieur de la paroi de délimitation (19) et la face supérieure de la plaque d'entrée (18) définit la hauteur $h_i$ de la section transversale d'entrée.

5. Bassin de décantation selon la revendication 2, **caractérisé en ce que**

   - la paroi de séparation (14) comporte plusieurs échancrures (21) superposées ;
   - les échancrures (21) sont susceptibles d'être ouvertes et fermées une à une ou en association au moyen d'éléments de fermeture.

6. Bassin de décantation selon la revendication 2, **caractérisé en ce**

   - la hauteur de la paroi de séparation (14) est réglable ;
   - le bassin d'entrée (13) est recouvert sur le dessus par une plaque de couverture (22) horizontale, déplaçable en hauteur ;
   - l'écart entre le bord supérieur de la paroi de séparation (14) et la face inférieure de la plaque de couverture (22) définit la hauteur variable $h_i$ de la section transversale d'entrée.

7. Bassin de décantation selon la revendication 1, **caractérisé par** un conduit d'entrée (20), dont la paroi est munie d'orifices d'écoulement.

8. Bassin de décantation selon la revendication 1, **caractérisé par** au moins deux tuyaux d'entrée (23a, 23b) superposés avec chacun au moins une échancrure d'entrée (24).

9. Bassin de décantation selon l'une quelconque des revendications 1 à 8, **caractérisé en ce qu'**au dessus de l'entrée est disposé au moins un panneau de guidage des effluents (7).

10. Bassin de décantation selon la revendication 9, **caractérisé en ce que** le panneau de guidage des effluents (7) s'étend sous un angle d'inclinaison aigu vers le haut, en direction du niveau de séparation (6).

**11.** Bassin de décantation selon la revendication 10, **caractérisé en ce que** l'angle d'inclinaison du panneau de guidage des effluents (7) est réglable.

**12.** Bassin de décantation selon la revendication 11, **caractérisé par** un dispositif de commande de l'angle d'inclinaison du panneau de guidage des effluents (7) en fonction du niveau de hauteur relatif $h_o$ de l'entrée (3).

Fig. 1a

Fig. 1b

Fig. 1c

Fig. 1d

Fig. 2a

Fig. 2b

Fig. 2c

Fig. 2d

Fig. 3a

Fig. 3b

Fig. 3c

Fig. 4a

Fig. 4b

Fig. 4c

Fig. 4d

Fig. 5

Fig. 6a

Fig. 6b

Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19758360 C2
- EP 0923971 A1
- DE 19830311 A1
- DE 1045931